# EUROPÄISCHE PATENTSCHRIFT

(11) **EP 3 146 166 B1**
(45) Veröffentlichungstag und Bekanntmachung des Hinweises auf die Patenterteilung: **06.05.2020**
(21) Anmeldenummer: 15716776.8
(22) Anmeldetag: 14.04.2015
(51) Int. Cl.: F01L 1/047, F01L 13/00

(54) **NOCKENWELLE**
CAMSHAFT
ARBRE À CAMES

(30) Priorität: 20.05.2014 DE 102014007287
(43) Veröffentlichungstag der Anmeldung: 29.03.2017
(73) Patentinhaber: ThyssenKrupp Presta TecCenter AG, 9492 Eschen (LI)
(72) Erfinder: KUNZ, Michael, 04552 Borna (DE); LEHMANN, Martin, 01855 Mittelndorf (DE)
(74) Vertreter: thyssenkrupp Intellectual Property GmbH
(86) Internationale Anmeldenummer: PCT/EP2015/058068
(87) Internationale Veröffentlichungsnummer: WO 2015/176874

(56) Entgegenhaltungen:
- DE-A1-102004 011 586
- DE-A1-102011 085 707
- US-A1- 2013 104 824

## Beschreibung

Die Erfindung betrifft eine Nockenwelle zur Ansteuerung von Zylinderventilen eines Verbrennungsmotors.

Um die Effizienz von Verbrennungsmotoren zu verbessern, ist es bekannt, die Nocken einer Nockenwelle an den Arbeitszustand des Verbrennungsmotors anzupassen. So zeigt zum Beispiel die DE 10 2004 011 586 A1 ein Verschiebenockensystem mit axial verschiebbaren Nockenträgern, so dass durch Verschieben des Nockenträgers auf eine anders geformte Nockenkontur gewechselt werden kann. Hierdurch kann zum Beispiel die Dauer und der Hub der Ventilansteuerung verändert werden. Andererseits ist aus der EP 1 696 107 A1 bekannt, einen Nocken verdrehbar zu gestalten, indem der Nocken verdrehbar auf einer Tragwelle angebracht ist und über einen Stift mit einer Innenwelle verbunden ist, die relativ zur Tragwelle verdreht werden kann. So kann die Winkellage und damit der Schaltzeitpunkt für das Zylinderventil verändert werden.

Aufgabe der vorliegenden Erfindung ist es, eine neuartige Nockenwelle bereitzustellen, mit der sowohl der Schaltzeitpunkt der Zylinderventile relativ zueinander variiert werden kann als auch die Dauer und der Hub der Ventilansteuerung, um eine noch bessere Anpassung an den aktuellen Arbeitszustand des Verbrennungsmotors zu erreichen und so die Effizienz des Verbrennungsmotors zu erhöhen.

Gelöst wird diese Aufgabe durch eine Nockenwelle mit einer als Hohlwelle ausgebildete Tragwelle, in deren Innerem eine Innenwelle konzentrisch zur Tragwelle angeordnet ist. Dabei ist die Innenwelle relativ zur Tragwelle verdrehbar. Weiterhin ist auf der Tragwelle ein erstes Nockensegment mit einer ersten Ausnehmung zur Aufnahme der Tragwelle angeordnet, das bezüglich der Tragwelle drehbar ist und mit Hilfe eines Verbindungsmittels drehfest und axial fest mit der Innenwelle verbunden ist. Weiterhin ist auf der Tragwelle ein zweites Nockensegment mit einer zweiten Ausnehmung zur Aufnahme der Tragwelle angeordnet. Dabei weist das zweite Nockensegment mindestens zwei Nockenkonturen auf und ist derart auf der Tragwelle befestigt, dass das zweite Nockensegment einerseits drehfest mit der Tragwelle verbunden ist und andererseits axial verschiebbar auf der Tragwelle angeordnet ist.

Unter einer drehfesten Verbindung zwischen einem Nockensegment und einer Welle wird im Sinne dieser Anmeldung verstanden, dass das Nockensegment nicht gegenüber der Welle verdreht werden kann. Entsprechend wird unter einer axial festen Verbindung zwischen einem Nockensegment und einer Welle verstanden, dass das Nockensegment nicht gegenüber der Welle axial verschoben werden kann.

Diese Kombination ermöglicht eine besonders flexible Ansteuerung der Zylinderventile. Einerseits kann durch die Verdrehung der Innenwelle zur Tragwelle die Winkellage zwischen den Nockenkonturen des ersten und des zweiten Nockensegmentes variiert werden, so dass die Zeitdauer zwischen der entsprechenden Ansteuerung der Ventile variabel eingestellt werden kann. Andererseits kann durch die Verschiebung des zweiten Nockensegmentes in axialer Richtung zwischen verschiedenen Nockenkonturen gewechselt werden. Da das zweite Nockensegment mindestens zwei axial beabstandete Nockenkonturen aufweist, kann durch die axiale Verschiebung ausgewählt werden, welche der Nockenkonturen aktiv ist. Eine Nockenkontur wird als aktiv bezeichnet, wenn sie sich an der richtigen Axialposition befindet, um bei Betrieb der Nockenwelle ein Zylinderventil anzusteuern. Durch axiales Verschieben des zweiten Nockensegmentes rückt die zweite Nockenkontur beispielsweise an die Axialposition der ersten Nockenkontur, so dass nun die zweite Nockenkontur aktiv ist, während vorher die erste Nockenkontur aktiv war. Da sich die Nockenkonturen des zweiten Nockensegmentes typischerweise voneinander unterscheiden, ergibt sich eine enorme Variabilität bei der Zylinderansteuerung.

Das Verbindungsmittel ist mit der Innenwelle verbunden und reicht durch eine erste Öffnung in der Tragwelle und greift in eine Öffnung des ersten Nockensegmentes. Auf diese Weise verbindet das Verbindungsmittel das erste Nockensegment mit der Innenwelle. Damit das Verbindungsmittel das Verdrehen der Innenwelle zur Tragwelle nicht behindert, ist die erste Öffnung in Umfangsrichtung größer als der Durchmesser des Verbindungsmittels. Die erste Öffnung ist also in Form eines Langloches gestaltet. Das Langloch erstreckt sich dabei umso weiter entlang des Umfangs je größer der gewünschte Verdrehwinkelbereich zwischen Innenwelle und Tragwelle ist.

Bei dem Verbindungsmittel kann es sich insbesondere um einen Stift handeln, der in die Innenwelle eingepresst wird. Alternativ kann das Verbindungsmittel auch eine Schraube sein, die in die Innenwelle eingeschraubt wird.

Lediglich beispielhaft werden in dieser Anmeldung zweite Nockensegmente mit zwei Nockenkonturen beschrieben. Das zweite Nockensegment kann jedoch auch drei oder mehr Nockenkonturen aufweisen. Ein Nullhub, bei dem keine Ansteuerung des entsprechenden Zylinderventils erfolgt, wird ebenfalls als Nockenkontur bezeichnet.

Das erste und das zweite Nockensegment können einstückig sein oder aus mehreren Komponenten zusammengefügt sein. Hierbei können auch Komponenten aus unterschiedlichen Materialien zum Einsatz kommen. Derartige zusammengesetzte Nockensegmente sind beispielsweise aus der DE102011051480A1 bekannt.

Das Dokument US 2013/104824 A1 offenbart eine Nockenwelle mit zwei benachbarten Nockenpaketen, die eine Änderung des Hubs und eine Phasenänderung ermöglichen.

Typischerweise ist der Abstand zwischen dem ersten und dem zweiten Nockensegment derart, dass beide Nockensegmente auf Ventile des gleichen Zylinders wirken.

Unter axialer Richtung wird im Sinne dieser Anmeldung eine Richtung verstanden, die parallel zur Drehachse der Nockenwelle verläuft. Die Umfangsrichtung verläuft senkrecht zur Drehachse entlang eines Umfangs der Nockenwelle.

Vorteilhaft ist es, wenn die Nockenwelle ein Rastmittel umfasst, das das zweite Nockensegment an einer der Mehrzahl von Axialpositionen verrastet. Dies gewährleistet einen stabilen Arbeitszustand, bei dem keine ungewollten Verschiebungen des zweiten Nockensegmentes auftreten.

Bei einer Ausführungsvariante ist das Rastmittel zumindest teilweise innerhalb der Innenwelle angeordnet. Hierdurch wird genügend Bauraum für das Rastmittel zur Verfügung gestellt. Bislang wurden verschiebbaren Nockensegmenten mit Rastmitteln nur bei Tragwellen eingesetzt, die massiv sind, wie beispielweise in der DE 10 2004 011 586 A1. Bei Nockenwellen, die Hohlwellen als Tragwellen umfassen, besteht die Schwierigkeit, genügend Bauraum für das Rastmittel zur Verfügung zu stellen. Einerseits wird ausreichend Bauraum benötigt, um das Rastmittel so groß auszubilden, dass es eine genügend starke Feststellkraft bereitstellt. Andererseits darf aber nicht zu viel Material der Tragwelle entfernt werden, damit die Belastbarkeit der Tragwelle erhalten bleibt bzw. nicht zu stark geschwächt wird. Aufgrund dieser Problematik ist es bisher nicht gelungen verschiebbare Nockensegmente bei Nockenwellen mit einer Hohlwelle als Tragwelle einzusetzen. Erfindungsgemäß wird dieses Problem dadurch überwunden, dass das Rastmittel zumindest teilweise innerhalb der Innenwelle angeordnet ist. Somit steht einerseits ausreichend Bauraum für das Rastmittel zur Verfügung und andererseits wird die Belastbarkeit der Tragwelle nicht zu stark reduziert.

Bei einer weitergebildeten Ausführungsform verrastet das Rastmittel das zweite Nockensegment gegenüber der Innenwelle. Dies hat den Vorteil, dass die relative Position vom ersten Nockensegment und zweiten Nockensegment einfacher festgelegt wird. Da das erste Nockensegment sowohl drehfest als auch axial fest mit der Innenwelle verbunden ist, führt eine Verrastung des zweiten Nockensegmentes relativ zur Innenwelle dazu, dass der Abstand zwischen ersten Nockensegment und zweitem Nockensegment über die Innenwelle festgelegt wird. Auf diese Weise lässt sich der axiale Abstand der beiden Nockensegmente präzise festlegen.

Eine Möglichkeit zur Ausführung des Rastmittels besteht darin, eine Bohrung in der Innenwelle mit einem federbelasteten und in radialer Richtung beweglich gelagerten Rastkörper vorzusehen. Dabei reicht der Rastkörper durch eine Rastöffnung in der Tragwelle und greift in eine Rastnut in der Innenseite der zweiten Ausnehmung des zweiten Nockensegmentes ein. Da die Innenwelle innerhalb der Tragwelle drehbar ist, ist es erforderlich, dass die Rastöffnung in der Tragwelle und die Rastnut jeweils eine Ausdehnung in Umfangsrichtung aufweisen, die größer ist als die Ausdehnung des Rastkörpers in Umfangsrichtung. Auf diese Weise wird eine Verdrehung der Innenwelle relativ zur Tragwelle nicht durch den Rastkörper behindert.

Die verschiedenen Rastnuten werden hierbei bevorzugt vollständig umlaufend ausgeführt, um einfachere Herstellung zu ermöglichen.

Bei einer Variante der Nockenwelle weisen die zweite Ausnehmung des zweiten Nockensegmentes und die Außenseite der Tragwelle sich gegenüberliegenden Einbuchtungen auf, so dass sich Hohlräume ergeben, in denen Lagerkörper angeordnet sind. Hierdurch wird die Drehfestigkeit des zweiten Nockensegmentes zur Tragwelle gewährleistet. Gleichzeitig tritt im Gegensatz zu einer Verzahnung kein axialer Bereich der Tragwelle mit einem erhöhten Durchmesser auf. Daher kann die Tragwelle problemlos auch in geschlossene Lageraufnahmen geschoben werden. Um eine axiale Verschiebung des zweiten Nockensegmentes auf der Tragwelle zu ermöglichen, weisen in diesem Fall die Einbuchtungen auf der Innenseite der zweiten Ausnehmung oder die Einbuchtungen auf der Außenseite der Tragwelle in axialer Richtung eine größere Ausdehnung auf als die Lagerkörper. In diesen Einbuchtungen gleiten die Lagerkörper beim Verschieben des zweiten Nockensegmentes ab. Die Drehfestigkeit wird dadurch unterstützt, dass die Einbuchtungen auf der Innenseite der zweiten Ausnehmung und die Einbuchtungen auf der Außenseite der Tragwelle in Umfangsrichtung eine Ausdehnung aufweisen, die im Wesentlichen der Ausdehnung der Lagerkörper in diese Richtung entspricht, um eine Verdrehung des zweiten Nockensegmentes relativ zur Tragwelle zu verhindern.

Bei der Montage der erfindungsgemäßen Nockenwelle wird zunächst die Innenwelle innerhalb der Tragwelle angeordnet. In einem nächsten Schritt wird das Rastmittel zumindest teilweise innerhalb der Innenwelle angeordnet. Weiterhin werden die Rastkörper in die Einbuchtungen auf der Außenseite der Tragwelle eingelegt. In einer bevorzugten Variante erstrecken sich die Einbuchtungen auf der Innenseite der zweiten Ausnehmung des zweiten Nockensegmentes über komplette axiale Ausdehnung des zweiten Nockensegmentes. In diesem Fall kann nun das zweite Nockensegment problemlos auf die Tragwelle aufgeschoben werden, so dass die eingelegten Lagerkörper mit den Einbuchtungen auf der Innenseite der zweiten Ausnehmung in Eingriff stehen. Beim Aufschieben wird die Feder des Rastmittels zunächst zusammengedrückt, um die Verschiebung zu ermöglichen. An der zugeordneten Axialposition bringt die Feder dann den Rastkörper mit der entsprechenden Rastnut in Eingriff und fixiert so die Axialposition.

Die Montage der Nockenwelle kann einerseits separat erfolgen, so dass die fertige Nockenwelle in offene Lageraufnahmen eines Verbrennungsmotors eingesetzt werden kann. Alternativ kann die Nockenwelle auch innerhalb von geschlossenen Lageraufnahmen mit einer Ausnehmung zur Aufnahme der Tragwelle montiert werden. Hierzu werden das erste Nockensegment, das zweite Nockensegment und die geschlossenen Lageraufnahmen in der gewünschten Reihenfolge aufgereiht, so dass die Ausnehmungen zur Aufnahme der Tragwelle entlang einer Achse verlaufen. Sodann werden Tragwelle und Innenwelle gemeinsam entlang dieser Achse durch die aufgereihten Ausnehmungen geschoben, so dass die Nockenwelle in den geschlossenen Lageraufnahmen entsteht. Das Einsetzen von Rastmittel und Lagerkörpern kann in diesem Fall vor oder nach dem Einschieben von Tragwelle und Innenwelle in die aufgereihten Bauteile erfolgen.
Auch bei diesem Montageverfahren werden gegebenenfalls das erste und zweite Nockensegment auch nach Einschieben von Tragwelle und Innenwelle nochmals gegenüber der Tragwelle verschoben bis beide ihre endgültige Axialposition erreicht haben.

Die Lagerung der Nockenwelle im Verbrennungsmotor kann auf der Tragwelle erfolgen oder auch auf einem der Nockensegmente. Besonders vorteilhaft ist es, wenn das erste Nockensegment oder das zweite Nockensegment einen Bereich umfasst, der als Lagerstelle zur Lagerung der Nockenwelle in einer Lageraufnahme eines Verbrennungsmotors ausgebildet ist. Beispielsweise kann es sich bei diesem Bereich um einen Bund des ersten oder des zweiten Nockensegmentes handeln, der als Lagerstelle ausgebildet ist. Ebenso ist es möglich, dass ein Verstellbereich des zweiten Nockensegmentes mit einer im Folgenden beschriebenen, nutförmigen Kulissenbahn als Lagerstelle ausgebildet ist.

Bei den Lagerkörpern kann es sich zum Beispiel um Lagernadeln oder um Kugeln handeln.

Bei einer alternativen Variante sind auf der Innenseite der zweiten Ausnehmung und auf der Außenseite der Tragwelle ineinandergreifende Verzahnungen angeordnet. Die Zahnrillen der Verzahnung erstrecken sich dabei in axialer Richtung, so dass eine axiale Verschiebung des zweiten Nockensegmentes auf der Tragwelle ermöglicht und eine Verdrehung des zweiten Nockenelementes relativ zur Tragwelle verhindert wird. Eine Verzahnung lässt sich relativ einfach fertigen und erfordert kein zusätzliches Einlegen von Lagerkörpern. Beispielsweise kann die Verzahnung auf der Außenseite der Tragwelle in Form eines aufgepressten Zahnringes ausgeführt sein.

Eine Ausführungsvariante der erfindungsgemäßen Nockenwelle ist dergestalt, dass das zweite Nockensegment mindestens eine erste Kulissenbahn zum Bewegen des zweiten Nockensegmentes in eine erste axiale Richtung und eine zweite Kulissenbahn zum Bewegen des zweiten Nockensegmentes in eine zweite axiale Richtung aufweisen. Hierbei ist die zweite axiale Richtung zur ersten axialen Richtung entgegengesetzt.

Kulissenbahnen sind einfach herzustellende Mittel, um die Verschiebung von Elementen auf rotierenden Wellen herbeizuführen. Dabei macht man sich die bereits bestehende Drehbewegung der Welle zu Nutze, indem ein feststehendes Mittel, wie zum Beispiel ein Mitnehmerstift, mit der Kulissenbahn des Elementes in Kontakt gebracht wird. Die Kulissenbahn verläuft dabei zumindest bereichsweise schräg zur Umfangsrichtung (d.h. weder entlang der Umfangsrichtung noch entlang der Axialrichtung). Bei der Drehung der Welle gleitet die Kulissenbahn am Stift entlang. Da der Stift feststehend ist, wird durch die Drehung eine Kraft auf die Kulissenbahn ausgeübt, die Kraftkomponenten in Axialrichtung und in Umfangsrichtung hat. Eine Bewegung der Kulissenbahn in Umfangsrichtung (d.h. eine Verdrehung der Kulissenbahn) wird normalerweise ausgeschlossen, indem das Element drehfest auf der Welle angebracht ist. Somit verbleibt eine Kraftkomponente in Axialrichtung, die zu einer Verschiebung der Kulissenbahn und damit zu einer Verschiebung des Elementes führt.

Kulissenbahnen können auf zwei unterschiedliche Arten ausgebildet sein. Zum einen ist es möglich die Kulissenbahn nutförmig auszubilden. In die nutförmige Kulissenbahn kann dann zum Verschieben des Elementes ein feststehender Stift eingebracht werden. Die Kulissenbahn verläuft dabei zumindest bereichsweise schräg zur Umfangsrichtung (d.h. weder entlang der Umfangsrichtung noch in Axialrichtung). Möglich ist zum Beispiel ein schraubenförmiger Verlauf mit einer konstanten Steigung der Schraubenbahn oder ein schraubenförmiger Verlauf mit variierender Steigung. Weitere komplexe Verläufe sind ebenfalls möglich.

Andererseits kann die Kulissenbahn auch in Form einer zumindest bereichsweise schräg verlaufenden Stirnseite des zweiten Nockensegmentes gebildet sein. Hierdurch wird der Platz für eine Nut auf dem zweiten Nockensegment eingespart.

Somit ist es also möglich, sowohl die erste Kulissenbahn als auch die zweite Kulissenbahn nutförmig auszubilden, oder die erste Kulissenbahn und die zweite Kulissenbahn in Form einer zumindest bereichsweise schräg verlaufenden, dem jeweils anderen Nockensegment abgewandten Stirnseite eines Nockensegments auszubilden. Ebenso sind Mischformen möglich, bei denen eine Kulissenbahn als eine schräg verlaufende Nut geformt ist und die andere Kulissenbahn als eine bereichsweise schräg verlaufende Stirnseite.

Näher beschrieben wird die Erfindung anhand der Figuren. Dabei zeigen
Figur 1 einen Längsschnitt einer ersten Ausführungsform der erfindungsgemäßen Nockenwelle;
Figur 2 einen Querschnitt der ersten Ausführungsform;
Figur 3 einen weiteren Querschnitt der ersten Ausführungsform;
Figur 4 eine dreidimensionale Darstellung der ersten Ausführungsform;
Figur 5 eine dreidimensionale Darstellung einer zweiten Ausführungsform;
Figur 6 einen Längsschnitt einer dritten Ausführungsform;
Figur 7 eine beispielhafte Darstellung von Ventilhubkurven;
Figur 8 einen Schnitt durch eine schematische Ausführungsform zur Erläuterung einzelner konstruktiver Aspekte;
Figur 9 einen Längsschnitt einer vierten Ausführungsform der erfindungsgemäßen Nockenwelle;
Figur 10 einen Längsschnitt einer fünften Ausführungsform der erfindungsgemäßen Nockenwelle; und
Figur 11 einen Längsschnitt einer sechsten Ausführungsform der erfindungsgemäßen Nockenwelle.

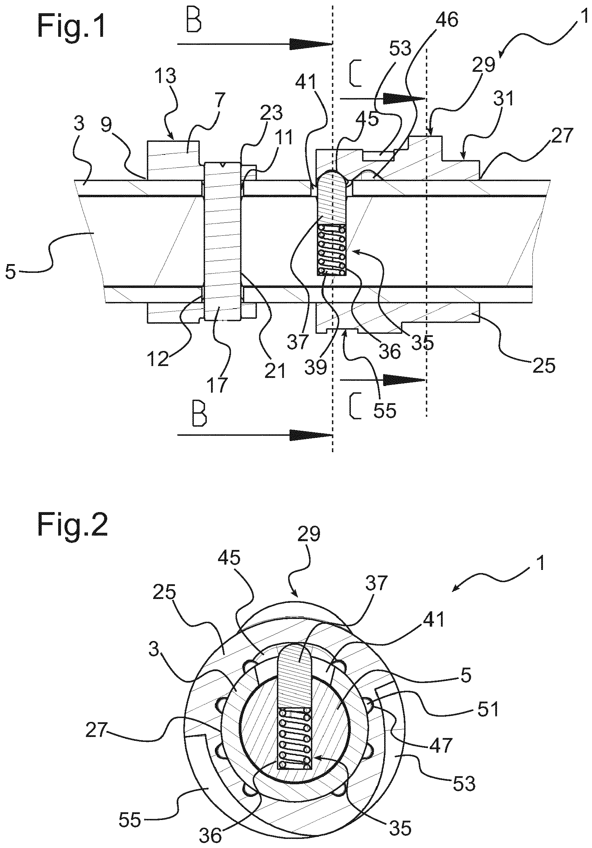

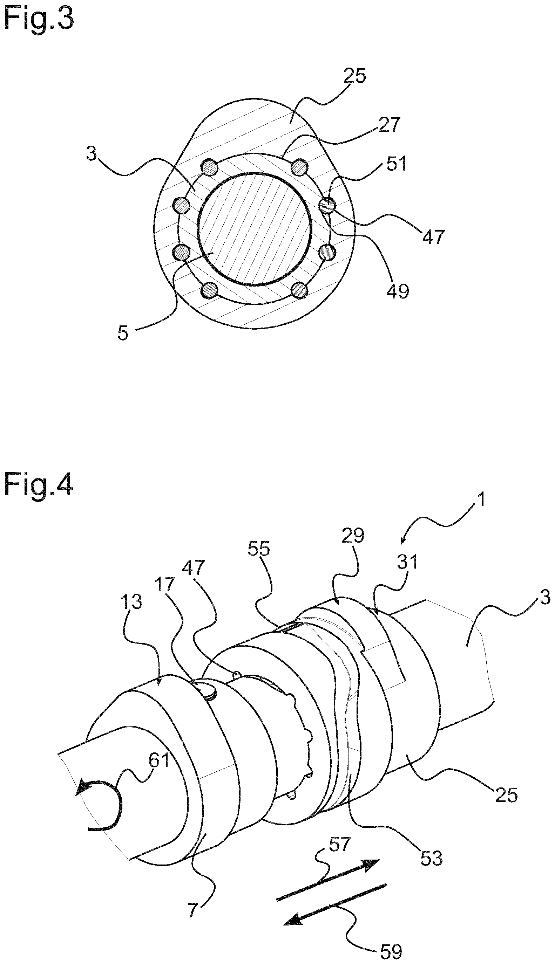

Die in den Figuren 1, 6, 8, 9, 10 und11 gezeigten Schnittebenen enthalten jeweils die Drehachse der Nockenwelle, wohingegen die Schnittebenen der Figuren 2 und 3 senkrecht zur Drehachse stehen.

In Figur 1 ist ein Längsschnitt der Nockenwelle 1 dargestellt. Die Nockenwelle 1 umfasst eine Tragwelle 3, die als Hohlwelle ausgebildet ist, und eine Innenwelle 5 die konzentrisch zur Tragwelle 3 angeordnet ist. Dabei ist die Innenwelle 5 relativ zur Tragwelle 3 verdrehbar. Auf der Tragwelle 3 ist ein erstes Nockensegment 7 mit einer ersten Ausnehmung 9 zur Aufnahme der Tragwelle 3 angeordnet. Mit Hilfe des Verbindungsmittels 17 ist das erste Nockensegment 7 mit der Innenwelle 5 drehfest und axial fest verbunden ist. Das Verbindungsmittel 17 reicht dabei durch eine erste Öffnung 11 in der Tragwelle 3 und greift in eine Öffnung 23 des ersten Nockensegmentes 7 und verbindet so das erste Nockensegment 7 mit der Innenwelle 5. Bezüglich der Tragwelle 3 ist das erste Nockensegment 7 drehbar. Beim Verdrehen der Innenwelle 5 relativ zur Tragwelle 3 wird somit das erste Nockensegment 7 bezüglich der Tragwelle 3 verdreht. Damit das Verbindungsmittel 17 das Verdrehen der Innenwelle 5 zur Tragwelle 3 nicht behindert, ist die erste Öffnung 11 in Umfangsrichtung größer als der Durchmesser des Verbindungsmittels 17. Die erste Öffnung 11 ist dabei in Form eines Langloches gestaltet. Das Langloch erstreckt sich dabei umso weiter entlang des Umfangs je größer der gewünschte Verdrehwinkelbereich zwischen Innenwelle 5 und Tragwelle 3 ist. Die Innenwelle 5 weist eine Bohrung 21 zur Aufnahme des Verbindungsmittels 17 auf. Das Verbindungsmittel 17 reicht durch die erste Öffnung 11 in der Tragwelle 3 und greift in eine Öffnung 23 des ersten Nockensegmentes 7.

Bei der dargestellten Ausführungsform ist die Bohrung 21 als eine durchgehende Bohrung ausgeführt und das Verbindungsmittel 17, in Form eines Stiftes, reicht durch die erste Öffnung 11 und eine zweite Öffnung 12, die der ersten Öffnung 11 gegenüberliegt, wobei das Verbindungsmittel 17 mit seinen gegenüberliegenden Enden in zwei Öffnungen 23 des ersten Nockensegmentes 7 eingreift. Statt einer derart symmetrischen Ausführung ist es auch möglich, die Bohrung 21 in Form eines Sackloches auszubilden, so dass nur eine Seite des Verbindungsmittels 17 durch eine erste Öffnung 11 in der Tragwelle 3 reicht und in eine Öffnung 23 eingreift. Bei der Montage werden die Öffnungen 23 mit den Öffnungen 11 und 12 sowie mit der Bohrung 21 in Überlapp gebracht. Sodann wird das Verbindungsmittel 17, in Form eines Stiftes, in die Bohrung 21 und die Öffnungen 11 und 12 eingepresst, so dass sich ein Presssitz ergibt, der das erste Nockensegment 7 drehfest und axial fest mit der Innenwelle 5 verbindet.

Benachbart zum ersten Nockensegment 7 ist auf der Tragwelle 3 ein zweites Nockensegment 25 angeordnet. Das zweite Nockensegment 25 weist eine zweite Ausnehmung 27 zur Aufnahme der Tragwelle 3, eine erste Nockenkontur 29 und eine zweite Nockenkontur 31 auf, die in Axialrichtung zueinander versetzt sind. Bei der in Figur 1 dargestellten Konfiguration der Nockenwelle 1 befindet sich das zweite Nockensegment 25 an einer Axialposition, so dass die erste Nockenkontur 29 aktiv ist. Dies bedeutet, dass im eingebauten Zustand der Nockenwelle 1 in einen Verbrennungsmotor mit der Nockenkontur 29 ein Zylinderventil angesteuert wird. Die Nockenkontur 31 hingegen ist nicht aktiv. Das bedeutet, dass sich die Nockenkontur 31 nicht an der richtigen Axialposition befindet, um ein Zylinderventil ansteuern zu können. Erfindungsgemäß ist das zweite Nockensegment 25 relativ zur Innenwelle 5 und zur Tragwelle 3 axial verschiebbar. Das zweite Nockensegment 25 kann also nach links (bei dieser Darstellung) verschoben werden, so dass die zweite Nockenkontur 31 an die Axialposition der ersten Nockenkontur 29 rückt. In diesem Fall wäre dann die zweite Nockenkontur 31 aktiv, da sie sich an der richtigen Axialposition befindet, um eine Ansteuerung eines Zylinderventils zu bewirken. Bei der dargestellten Ausführungsform ist die zweite Nockenkontur jedoch beispielhaft als ein Nullhub ausgeführt, so dass selbst wenn die zweite Nockenkontur 31 aktiv ist, keine Zylinderansteuerung erfolgt. Durch das Verschieben des zweiten Nockensegmentes 25 wird somit bewirkt, dass das zugeordnete Zylinderventil nicht mehr angesteuert wird. Es erfolgt eine Zylinderabschaltung. Statt einer Zylinderabschaltung kann durch das Verschieben des zweiten Nockensegmentes 25 alternativ auch in einen anderen Betriebsmodus gewechselt werden. In einem solchen Fall sind sowohl die erste Nockenkontur 29 als auch die zweite Nockenkontur 31 so ausgeführt, dass sie in der jeweiligen aktiven Stellung das Zylinderventil ansteuern. Die beiden Nockenkonturen 29 und 31 unterscheiden sich dann zum Beispiel in der Hubhöhe, so dass das Zylinderventil je nach Stellung des zweiten Nockensegmentes 25 unterschiedlich stark angesteuert wird, oder in der Winkelposition, so dass je nach Stellung des zweiten Nockensegments 25 das Zylinderventil zu unterschiedlichen Zeitpunkten angesteuert wird. Es ist auch möglich, dass die Nockenkonturen eine unterschiedliche Breite aufweisen, so dass die Betätigungsdauer des Zylinderventils unterschiedlich ist.

Um das zweite Nockensegment 25 an der gewünschten Axialposition zu fixieren, ist ein Rastmittel 35 vorgesehen, das das zweite Nockensegment 25 an einer Mehrzahl von Axialpositionen verrastet. Das Rastmittel 35 umfasst eine Bohrung 36 in der Innenwelle 5 mit einem federbelasteten Rastkörper 37. Das Rastmittel 35 ist somit zumindest teilweise innerhalb der Innenwelle 5 angeordnet. In radialer Richtung ist der Rastkörper 37 beweglich gelagert. Diese radiale Bewegung des Rastköpers 37 erfolgt unter Zusammendrücken der Feder 39. Der federbelastete Rastkörper 37 reicht durch eine Rastöffnung 41 in der Tragwelle 3 und greift in eine Rastnut 45 in der Innenseite der zweiten Ausnehmung 27 des zweiten Nockensegmentes 25 ein. Verschiebt man das zweite Nockensegment 25 zum zweiten Betriebsmodus hin (d.h. nach links), so wird die Feder 39 zunächst zusammengedrückt, um die Verschiebung zu ermöglichen. An der zugeordneten Axialposition bringt die Feder 39 dann den Rastkörper 37 mit der anderen Rastnut 46 in Eingriff und fixiert so die Axialposition. Sowohl die Rastöffnung 41 als auch die beiden Rastnuten 45 und 46 haben jeweils eine Ausdehnung in Umfangsrichtung, die größer ist als die Ausdehnung des Rastkörpers 37 in Umfangsrichtung, so dass der Rastkörper 37 ein Verdrehung der Innenwelle 5 relativ zur Tragwelle 3 nicht behindert. Die Rastnuten 45 und 46 können auch vollständig umlaufend ausgeführt sein. Dies ermöglicht dann ein einfacheres Herstellungsverfahren. Die Bohrung 36 für den Rastkörper 37 verläuft bei dieser Ausführungsform parallel zur Bohrung 21 für das Verbindungsmittel 17. Dies hat den Vorteil, dass die beiden Bohrungen 21 und 36 vorgenommen werden können, ohne zwischen den Bohrschritten die Innenwelle zu verdrehen. Der Durchmesser der beiden Bohrungen 21 und 36 muss selbstverständlich nicht gleich sein. Prinzipiell ist aber ein beliebiger Winkel zwischen den beiden Bohrungen möglich. Darüber hinaus müssen die beiden Bohrungen 21 und 36 und damit das Verbindungsmittel 17 bzw. die Bewegungsrichtung des Rastkörpers 37 nicht zwangsläufig radial verlaufen. Auch ein schräger Verlauf mit Komponenten in Axialrichtung und Radialrichtung ist möglich.

Die axiale Verschiebung des zweiten Nockensegmentes 25 wird mit Hilfe einer ersten Kulissenbahn 53 und einer zweiten Kulissenbahn 55 bewirkt. Die Funktionsweise der Kulissenbahnen 53 und 55 wird unten mit Bezug auf Figur 4 näher erläutert.

In Figur 2 ist ein Querschnitt durch die Nockenwelle 1 gezeigt, wobei die Schnittebene senkrecht zur Drehachse verläuft und die Linie B-B enthält, die in Figur 1 dargestellt ist. Deutlich zu erkennen ist in Figur 2 die Tragwelle 3, in deren Innerem die Innenwelle 5 verdrehbar angeordnet ist. Teilweise im Inneren der Innenwelle 5 ist das Rastmittel 35 angeordnet. Das Rastmittel 35 umfasst die Sackbohrung 36 in der Innenwelle mit dem federbelasteten Rastkörper 37. Auf der Tragwelle 3 ist das zweite Nockensegment 25 angeordnet. Auf der Innenseite der zweiten Ausnehmung 27 des zweiten Nockensegmentes 25 ist eine Rastnut 45 angeordnet. Der federbelastete Rastkörper 37 reicht durch eine Rastöffnung 41 in der Tragwelle 3 und greift in die Rastnut 45 in der Innenseite der zweiten Ausnehmung 27 des zweiten Nockensegmentes 25 ein. Sowohl die Rastöffnung 41 als auch die beiden Rastnuten 45 und 46 haben jeweils eine Ausdehnung in Umfangsrichtung, die größer ist als die Ausdehnung des Rastkörpers 37 in Umfangsrichtung, so dass der Rastkörper 37 ein Verdrehung der Innenwelle 5 relativ zur Tragwelle 3 nicht behindert. Bei der gezeigten Darstellung befindet sich der Rastkörper 37 mittig in der Rastöffnung 41 und der Rastnut 45. Die Innenwelle 5 kann somit gegenüber der Tragwelle 3 in beide Richtungen um einen bestimmten Betrag verdreht werden, ohne dass der Rastkörper 37 die Drehung behindert.

Figur 2 zeigt weiterhin Einbuchtungen 47 auf der Innenseite der zweiten Ausnehmung 27 des zweiten Nockensegmentes 25. Da sich die Einbuchtungen 47 über die komplette axiale Ausdehnung des zweiten Nockensegmentes erstrecken, sind die Einbuchtungen auch im vorliegenden Schnitt erkennbar. Die korrespondierenden gegenüberliegenden Einbuchtungen 49 (siehe Figur 3) in der Außenseite der Tragwelle 3 erstrecken sich allerdings nicht bis zu der in Figur 2 gezeigten Schnittebene und sind daher in Figur 2 nicht sichtbar. In den Einbuchtungen 49 liegend sind die Lagerkörper 51 dargestellt. Über den Umfang verteilt sind acht Lagerkörper 51 in entsprechenden Hohlräumen, gebildet durch Einbuchtungen 47 und 49, angeordnet. Vorliegend handelt es sich bei den Lagerkörpern 51 um Lagernadel. Die Verwendung von anderen Lagerkörpern wie zum Beispiel Lagerkugeln ist ebenfalls möglich.

Figur 3 zeigt einen weiteren Querschnitt durch die Nockenwelle 1, wobei die Schnittebene senkrecht zur Drehachse verläuft und diesmal die Linie C-C enthält, die in Figur 1 dargestellt ist. Neben den bereits erläuterten Komponenten zeigt Figur 3, dass auf der Innenseite der zweiten Ausnehmung 27 des zweiten Nockensegmentes 25 Einbuchtungen 47 angeordnet sind. Gegenüber den Einbuchtungen 47 ist jeweils eine Einbuchtung 49 auf der Außenseite der Tragwelle angeordnet, so dass sich jeweils Hohlräume ergeben, in denen die Lagerkörper 51 angeordnet sind.

Anhand der Figuren 2 und 3 wird deutlich, dass die die Einbuchtungen 47 auf der Innenseite der zweiten Ausnehmung 27 in axialer Richtung eine größere Ausdehnung aufweisen als die Lagerkörper 51. Vorliegend erstrecken sich die Einbuchtungen auf der Innenseite der zweiten Ausnehmung 27 sogar über die komplette axiale Ausdehnung des zweiten Nockensegmentes. Dieser Unterschied in der Ausdehnung führt dazu, dass das zweite Nockensegment auf der Tragwelle verschoben werden kann. Alternativ ist auch der umgekehrte Aufbau möglich, bei dem die Einbuchtungen 49 auf der Außenseite der Tragwelle 3 eine größere axiale Ausdehnung aufweisen als die Lagerkörper 51. In Umfangsrichtung weisen dagegen die beiden Einbuchtungen 47 und 49 eine Ausdehnung auf, die im Wesentlichen der Ausdehnung der Lagerkörper 51 in diese Richtung entspricht, um eine Verdrehung des zweiten Nockensegmentes 25 relativ zur Tragwelle 3 zu verhindern.

In Figur 4 ist die erfindungsgemäße Nockenwelle 1 in einer dreidimensionalen Darstellung gezeigt. Auf der Tragwelle 3 ist das erste Nockensegment 7 angeordnet, das bezüglich der Tragwelle 3 drehbar ist und mit Hilfe des Verbindungsmittels 17 drehfest und axial fest mit der Innenwelle verbunden ist. Das erste Nockensegment 7 weist eine erste Nockenkontur 13 auf. Benachbart zum ersten Nockensegment 7 ist auf der Tragwelle 3 das zweite Nockensegment 25 angeordnet. Das zweite Nockensegment 25 weist eine erste Nockenkontur 29 und eine zweite Nockenkontur 31 auf. Neben der ersten Nockenkontur 29 sind am zweiten Nockensegment 25 eine erste Kulissenbahn 53 und eine zweite Kulissenbahn 55 angeordnet. Die erste Kulissenbahn 53 dient dazu, das zweite Nockensegment 25 in eine erste axiale Richtung 57 zu bewegen, und die zweite Kulissenbahn dient dazu, das zweite Nockensegment 25 in eine zweite axiale Richtung 59 zu bewegen. Die Drehrichtung der Nockenwelle 1 ist in Figur 4 mit 61 bezeichnet. Die Nockenkontur 13 des ersten Nockensegmentes bewegt sich bei Drehung der Nockenwelle 1 also vom Betrachter weg. Führt man bei dieser Drehrichtung einen feststehenden Stift im oberen Bereich in die erste Kulissenbahn 53 ein, so führt der schräge Verlauf der ersten Kulissenbahn 53, dazu dass das zweite Nockensegment während einer halben Umdrehung der Nockenwelle 1 in die erste axiale Richtung 57 bewegt wird. Die zweite Kulissenbahn 55 besitzt ebenfalls einen schrägen Verlauf, wobei die Kulissenbahn jedoch einen entgegensetzten Winkel zur Umfangsrichtung aufweist. Bringt man den gleichen feststehenden Stift in die zweite Kulissenbahn 55 des (nun in erste axiale Richtung 57 verschobenen) zweiten Nockensegments 25 ein, so wird das zweite Nockensegment 25 während einer halben Umdrehung der Nockenwelle 1 in die zweite axiale Richtung 59 bewegt. Prinzipiell können die Verläufe der ersten und zweiten Kulissenbahn 53 und 55 so gewählt werden, dass die Bewegung des zweiten Nockensegmentes 25 während eines beliebigen Bruchteils einer Umdrehung erfolgt. Der Wechsel zwischen zwei Betriebsmodi sollte zwischen zwei aufeinanderfolgenden Ansteuerungen eines Zylinderventils erfolgen. Daher sollte die Bewegung des zweiten Nockensegmentes 25 spätestens nach einer Umdrehung abgeschlossen sein. Die erfindungsgemäße Ausführung mit einer ersten Kulissenbahn 53 und einer zweiten Kulissenbahn 55, die jeweils eine Bewegung während einer halben Umdrehung bewirken, hat den Vorteil, dass die beiden Kulissenbahnen an der gleichen Axialposition auf gegenüberliegenden Seiten der Nockenwelle 1 angeordnet werden können. Dies ermöglicht eine sehr kompakte Bauform des zweiten Nockensegmentes 25. Bei größeren Bruchteilen einer Umdrehung ist dies nicht möglich, da die Kulissenbahnen sich dann schneiden würden. In dem Fall müssten die Kulissenbahnen in Axialrichtung versetzt zueinander angeordnet werden. Andererseits haben kleinere Bruchteile einer Umdrehung den Nachteil, dass die Ansteuerung des feststehenden Stiftes präziser erfolgen müsste je kleiner der Bruchteil ist. Die Bewegung während einer halben Umdrehung bildet somit einen guten Kompromiss.

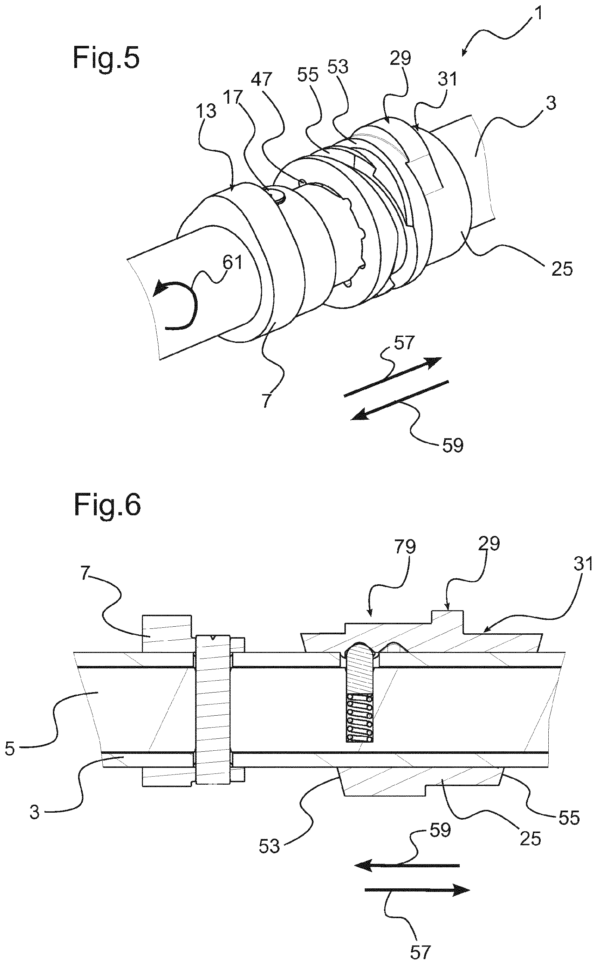

Figur 5 zeigt eine zweite Ausführungsform der erfindungsgemäßen Nockenwelle 1. Die dargestellte Variante der Nockenwelle 1 unterscheidet sich von Figur 4 lediglich in der Ausgestaltung der Kulissenbahnen 53 und 55. Die Kulissenbahnen 53 und 55 bewirken jeweils eine Bewegung während einer ganzen Umdrehung. Um eine kompakte Bauweise zu realisieren, sind die beiden Kulissenbahnen bei dieser Variante überschneidend ausgeführt. Die Kulissenbahnen können dabei zum Beispiel wie in der DE102007051739A1 oder der DE102010033087A1 beschrieben realisiert werden.

Figur 6 zeigt einen Längsschnitt einer dritten Ausführungsform der erfindungsgemäßen Nockenwelle 1. Dabei ist die Darstellung im Wesentlichen identisch zu Figur 1. Im Gegensatz zu Figur 1 weist die dritte Ausführungsform keine nutförmigen Kulissenbahnen auf. Stattdessen ist die erste Kulissenbahn 53 in Form einer zumindest bereichsweise schräg zur Umfangsrichtung verlaufenden, dem ersten Nockensegment 7 zugewandten, Stirnseite des zweiten Nockensegmentes 25 ausgebildet. Zum Bewegen des zweiten Nockensegmentes 25 wird ein feststehender Stift radial mit der Kulissenbahn 53 in Kontakt gebracht. Dies geschieht in einem Bereich der Kulissenbahn 53, an dem der Abstand der Kulissenbahn zum ersten Nockensegment nicht seinen Minimalwert hat. Bei der Drehung der Nockenwelle 1 gleitet die Kulissenbahn 53 am Stift entlang. Da der Stift in axialer Richtung feststehend ist, verschiebt sich die Kulissenbahn 53 und damit das zweite Nockensegment 7 in die erste axiale Richtung 57 vom ersten Nockensegment 7 weg. Analog kann eine Verschiebung des zweiten Nockensegmentes 25 in die zweite axiale Richtung 59 zum ersten Nockensegment 7 hin bewirkt werden. Hierzu ist die zweite Kulissenbahn 55 in Form einer zumindest bereichsweise schräg verlaufenden, dem ersten Nockensegment abgewandten, Stirnseite des zweiten Nockensegmentes 25 ausgebildet.

Weiterhin zeigt Figur 6 einen Bereich 79 des zweiten Nockensegmentes 25, der als Lagerstelle zur Lagerung der Nockenwelle in einer Lageraufnahmen eines Verbrennungsmotors ausgebildet ist.

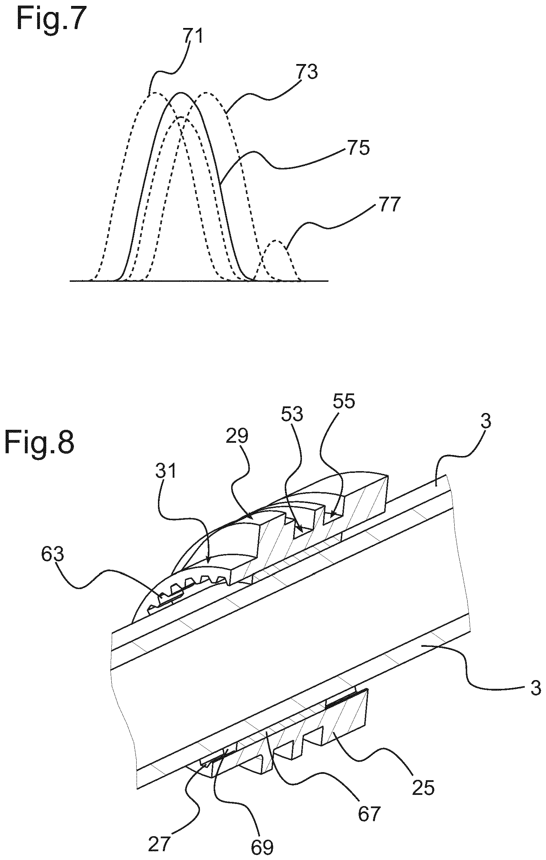

Figur 7 zeigt die Funktionsweise der Nockenwelle im Zusammenhang mit Ventilhubkurven. Auf der horizontale Achse ist der Drehwinkel der Tragwelle aufgetragen und auf der vertikalen Achse der Ventilhub in Längeneinheiten. Die zum ersten Nockensegment 7 gehörenden Ventilhubkurven sind gepunktet dargestellt und mit 71 bzw. 73 bezeichnet. Da auf der horizontalen Achse der Drehwinkel der Tragwelle aufgetragen ist, entspricht eine Verdrehung des ersten Nockensegmentes 7 relativ zur Tragwelle 3 einer horizontalen Verschiebung der Ventilhubkurve. Das erste Nockensegment 7 kann kontinuierlich zwischen zwei extremen Drehstellungen variiert werden. In der ersten extremen Drehstellung wird die Ventilhubkurve 71 bewirkt und in der zweiten extremen Drehstellung die Ventilhubkurve 73. Beide Ventilhubkurven 71 und 73 haben einen identischen Verlauf. Der horizontale Abstand zwischen den beiden Ventilhubkurven 71 und 73 beträgt in diesem Fall 30°. Dies ist der maximale Drehwinkel, um den das erste Nockensegment 7 relativ zur Tragwelle 3 verdreht werden kann. Der Zahlenwert hängt von den genauen Anforderungen ab. Typischerweise ist der Zahlenwert ein Kompromiss zwischen einer möglichst hohen Flexibilität mit einem großen maximalen Drehwinkel und einer hohen Stabilität der Tragwelle 3. Je größer der Drehwinkel ist, desto größer müssen auch die Öffnungen 11 und 12 in Umfangsrichtung sein. Dies reduziert die Stabilität der Tragwelle.

Die durchgezogene Linie zeigt die Ventilhubkurve 75 des zweiten Nockensegmentes 25 im ersten Betriebsmodus, bei dem die erste Nockenkontur 29 aktiv ist. In der dargestellten Variante hat die Ventilhubkurve 75 exemplarisch den gleichen Verlauf wie die Ventilhubkurven 71 und 73. Durch axiales Verschieben des zweiten Nockensegmentes 25 kann in einen zweiten Betriebsmodus gewechselt werden, bei dem die Nockenkontur 31 aktiv ist. In diesem Fall ergibt sich die gestrichelte Ventilhubkurve 77, bei der das Ventil während eines Umlaufs der Nockenwelle 1 zunächst geöffnet, dann wieder geschlossen und dann ein weiteres Mal leicht geöffnet wird. Da das zweite Nockensegment 25 nur eine diskrete Anzahl von Stellungen einnehmen kann (bei den dargestellten Varianten jeweils zwei verschiedene Stellungen) sind nur diskrete Ventilhubkurven 75 und 77 möglich zwischen denen geschaltet werden kann. Die genaue Form der Ventilhubkurven 75 und 77 kann dagegen bei der Herstellung des zweiten Nockensegmentes 25 frei festgelegt werden.

Figur 8 zeigt beispielhaft Konstruktionsvarianten, die bei der beschriebenen Nockenwelle zum Einsatz kommen können. Gezeigt ist ein Schnitt durch eine Tragwelle 3, die ein zweites Nockensegment 25 aufweist. Statt der Einbuchtungen mit Lagerkörpern ist bei dieser Variante eine Verzahnung 63 auf der Innenseite der zweiten Ausnehmung 27 angeordnet. Weiterhin weist die Außenseite der Tragwelle 3 eine Verzahnung 69 auf, wobei die beiden Verzahnungen 63 und 69 ineinandergreifen. Die Zahnrillen beider Verzahnungen erstrecken sich in axialer Richtung, so dass eine axiale Verschiebung des zweiten Nockensegmentes 25 auf der Tragwelle 3 ermöglicht wird und eine Verdrehung des zweiten Nockenelementes 25 relativ zur Tragwelle 3 verhindert wird. Die Verzahnung 69 kann einstückig mit der Tragwelle 3 ausgebildet sein oder wie gezeigt in Form eines aufgepressten Zahnringes 67 ausgeführt sein.

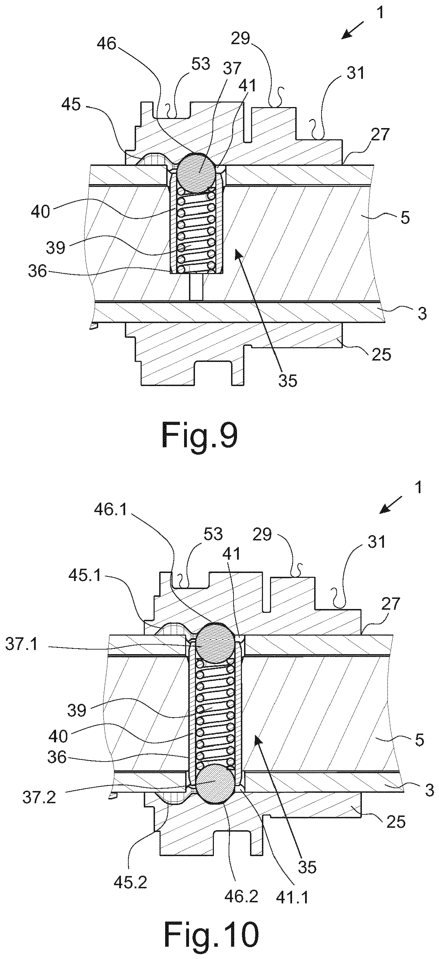

In Figur 9 ist ein Längsschnitt einer weiteren, insbesondere vierten Ausführungsform der erfindungsgemäßen Nockenwelle 1 dargestellt. Die Nockenwelle 1 umfasst, wie die in der Figur 1 gezeigte erste Ausführungsform einer erfindungsgemäßen Nockenwelle 1, eine Tragwelle 3, die als Hohlwelle ausgebildet ist, und eine Innenwelle 5 die konzentrisch zur Tragwelle 3 angeordnet ist. Dabei ist die Innenwelle 5 relativ zur Tragwelle 3 verdrehbar. Auf der Tragwelle 3 ist zumindest ein Nockensegment 25 mit einer Ausnehmung 27 zur Aufnahme der Tragwelle 3 angeordnet.

Das Nockensegment 25 weist eine erste Nockenkontur 29 und eine zweite Nockenkontur 31 auf, die in Axialrichtung zueinander versetzt sind. Erfindungsgemäß ist das Nockensegment 25, welches im Rahmen der Erfindung auch als zweites Nockensegment 25 bezeichnet wird, relativ zur Innenwelle 5 und zur Tragwelle 3 axial verschiebbar. Demnach ist das Nockensegment 25 nach rechts (bei dieser Darstellung) verschiebbar, sodass die erste Nockenkontur 29 an die Axialposition der zweiten Nockenkontur 31 rückt, wodurch die Aktivität von der zweiten Nockenkontur 31 auf die erste Nockenkontur 29 übertragen wird. Das bedeutet, dass infolgedessen die erste Nockenkontur 29 aktiv ist, da sie sich an der richtigen Axialposition befindet, um eine Ansteuerung eines Zylinderventils zu bewirken. Die beiden Nockenkonturen 29 und 31 unterscheiden sich zum Beispiel zumindest in der Hubhöhe, so dass das Zylinderventil je nach Stellung des Nockensegmentes 25 vorteilhaft unterschiedlich stark angesteuert wird, oder in der Winkelposition, so dass je nach Stellung des Nockensegments 25 das Zylinderventil zu unterschiedlichen Zeitpunkten angesteuert wird, oder dass es zu einer Zylinderabschaltung aufgrund einer Nullhubausführung kommt. Es ist auch möglich, dass die Nockenkonturen eine unterschiedliche Länge hinsichtlich des Konturbereiches aufweisen, so dass die Betätigungsdauer des Zylinderventils unterschiedlich ist.

Um das Nockensegment 25 an der gewünschten Axialposition zu fixieren, ist ein Rastmittel 35 vorgesehen, das das Nockensegment 25 an einer Mehrzahl von Axialpositionen verrastet. Das Rastmittel 35 umfasst eine Hülse 40, welche in einer Bohrung 36 in der Innenwelle 5 angeordnet ist, sowie einen federbelasteten Rastkörper 37. Das Rastmittel 35 ist somit zumindest teilweise innerhalb der Innenwelle 5 angeordnet. Vorteilhaft dient die Hülse 40, welche sich zumindest abschnittsweise entlang der Bohrung 36 erstreckt, zu einer optimierten Führung bzw. Führungslänge des Rastkörpers 37. In radialer Richtung ist der Rastkörper 37 beweglich gelagert. Der Rastkörper 37 ist vorteilhaft ein Normteil, wie eine Kugel bzw. ein kugelförmiger Körper, wodurch die Herstellung des Rastmittels und der erfindungsgemäßen Nockenwelle vorteilhaft kostenreduziert ermöglicht wird. Diese radiale Bewegung des Rastköpers 37 erfolgt unter Zusammendrücken der Feder 39. Der federbelastete Rastkörper 37 reicht durch eine Rastöffnung 41 in der Tragwelle 3 und greift in eine Rastnut 46 in der Innenseite der zweiten Ausnehmung 27 des Nockensegmentes 25 ein. Verschiebt man das zweite Nockensegment 25 zum zweiten Betriebsmodus hin (d.h. nach rechts), so wird die Feder 39 zunächst zusammengedrückt, um die Verschiebung zu ermöglichen. An der zugeordneten Axialposition bringt die Feder 39 dann den Rastkörper 37 mit der anderen Rastnut 45 in Eingriff und fixiert so die Axialposition. Sowohl die Rastöffnung 41 als auch die beiden Rastnuten 45 und 46 haben jeweils eine Ausdehnung in Umfangsrichtung, die größer ist als die Ausdehnung des Rastkörpers 37 in Umfangsrichtung, so dass der Rastkörper 37 und vorteilhaft auch die Hülse 40 eine Verdrehung der Innenwelle 5 relativ zur Tragwelle 3 nicht behindern. Die Rastnuten 45 und 46 können auch vollständig umlaufend ausgeführt sein. Dies ermöglicht dann ein einfacheres Herstellungsverfahren. Die Bohrung 36 für den Rastkörper 37 ist vorteilhaft eine Sacklochbohrung

Die axiale Verschiebung des Nockensegmentes 25 wird mit Hilfe zumindest einer Kulissenbahn 53, wie beispielsweise mit Bezug auf Figur 4 beschrieben, bewirkt.

In Figur 10 ist ein Längsschnitt einer weiteren, insbesondere fünften Ausführungsform der erfindungsgemäßen Nockenwelle 1 dargestellt, welche sich von der in der Figur 9 gezeigten Ausführungsform lediglich dahingehend unterscheidet, dass das Rastmittel 35 zwei Rastkörper 37.1 und 37.2 aufweist und die Hülse 40 innerhalb einer Bohrung 36 angeordnet ist, welche sich vollständig in Gestalt einer Durchgangsbohrung durch die Innenwelle 5 erstreckt. Demnach erstreckt sich auch die Hülse 40 im Wesentlichen vollständig durch die Innenwelle 5 derart, dass die Hülsenlängsachse im Wesentlichen orthogonal zur Innenwellenlängsachse ausgerichtet ist. Demzufolge weist auch die Tragwelle eine erste Rastöffnung 41.1 sowie eine zweite Rastöffnung 41.2 auf, welcher der ersten Rastöffnung 41.1 im Wesentlichen gegenüberliegend ausgebildet ist. Die federbelasteten Rastkörper 37.1, 37.2 reichen durch eine jeweilige Rastöffnung 41.1, 41.2 in der Tragwelle 3 und greifen in eine entsprechende Rastnut 46.1, 46.2 in der Innenseite der Ausnehmung 27 des Nockensegmentes 25 ein. Verschiebt man das Nockensegment 25 beispielsweise nach rechts, so wird die Feder 39 zunächst zusammengedrückt, um die Verschiebung zu ermöglichen. Die Rastkörper 37.1, 37.2 werden zumindest teilweise in die Bohrung 36 der Innenwelle 5 hineinbewegt, wobei deren Bewegung aufgrund der Hülse 40 begrenzt wird. Es ist denkbar, dass die Hülse 40 vorteilhaft als Anschlagselement für zumindest einen der Rastkörper 37.1, 37.2 dient. Hierbei ist es möglich, dass die Hülse 40 die Bewegung von wenigstens einem der Rastkörper 37.1, 37.2 zumindest in radialer Richtung ausgehend von einer zentrischen Längsachse der Hülse 40 oder in Längsrichtung, das bedeutet entlang der zentrischen Längsachse der Hülse begrenzt. An der zugeordneten Axialposition bringt die Feder 39 dann die Rastkörper 37.1 und 37.2 mit den anderen Rastnuten 45.1, 45.2 in Eingriff und fixiert so die Axialposition.

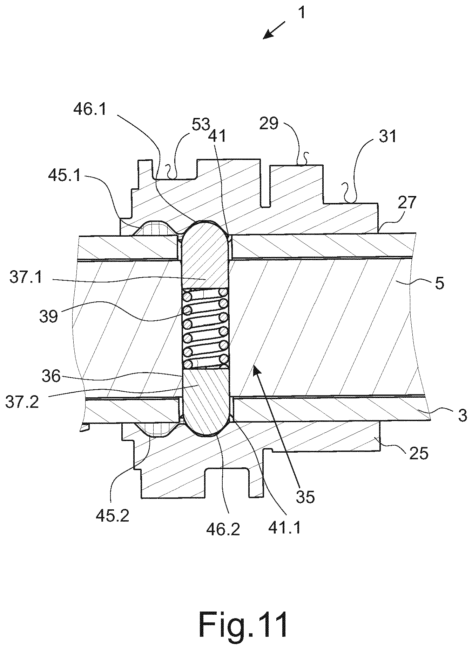

Des Weiteren erstreckt sich eine Feder 39 durch die Hülse 40 und folglich durch die Durchgangsbohrung 36. Ein Rastkörper 37.1, 37.2 ist jeweils an einem Ende der Feder 39 angeordnet, sodass beide Rastkörper 37.1, 37.2 sich einander gegenüberliegend an jeweils einem Einlass bzw. Auslass der Bohrung 36 angeordnet sind. Die Rastkörper 37.1, 37.2 sind beispielsweise Normteile, wie kugelförmige Rastkörper oder Kugel. Es ist jedoch auch möglich, dass die Rastkörper 37.1, 37.2 in Gestalt eines Kugelstiftes ausgestaltet sind, wie insbesondere in der Figur 11 gezeigt.

Vorteilhaft dient die Ausgestaltung des Rastmittels 35 mit zwei Rastkörpern 37.1 und 37.2 für eine optimierte Funktionalität der Nockenwelle und insbesondere der Verdrehung bzw. Verschiebung der Nockensegmente der Nockenwelle, da eine Abstützung des Nockensegmentes 25 nicht, wie in den vorangegangenen Ausführungsbeispielen, gegenüber der Innenwelle 5 stattfindet, sondern vielmehr in sich geschlossen ausgeführt ist. Dies führt vorteilhaft zu einer Reduzierung und besonders vorteilhaft zu einer Aufhebung der auf die Innenwelle 5 einwirkenden Kraft bzw. Kräfte.

In Figur 11 ist ein Längsschnitt einer weiteren, insbesondere sechsten Ausführungsform der erfindungsgemäßen Nockenwelle 1 dargestellt, welche sich von der in der Figur 10 gezeigten Ausführungsform lediglich dahingehend unterscheidet, dass anstelle von kugelförmigen Rastkörpern 37.1, 37.2 kugelstiftförmige Rastkörper 37.1, 37.2 angeordnet sind. Dies hat den Vorteil, dass die sich durch die Innenwelle 5 erstreckende Bohrung 36 kleiner dimensioniert werden kann (kleinerer Bohrungsdurchmesser) als die in der Ausführungsform der Figur 10 gezeigten Bohrung 36. Dies bedingt vorteilhaft eine Bauraumverbesserung des Rastmittels 35. Es ist des Weiteren denkbar, dass sich das Rastmittel lediglich durch eine Bohrung 36, insbesondere eine Durchgangsbohrung, wie in der Figur 11 gezeigt, erstreckt. Es ist jedoch auch denkbar, dass, wie in der Figur 10 gezeigt, sich eine Hülse 40 zusätzlich durch diese Bohrung 36 erstreckt, sodass die Führung der Rastkörper 37.1, 37.2 und insbesondere die Führungslänge der Rastkörper 37.1, 37.2 im Vergleich zu einer Ausgestaltung ohne Hülse 40 verbessert wird.

## Patentansprüche

1. Nockenwelle (1) umfassend eine als Hohlwelle ausgebildete Tragwelle, in deren Innerem eine Innenwelle (5) konzentrisch zur Tragwelle (3) angeordnet ist, wobei die Innenwelle (5) relativ zur Tragwelle (3) verdrehbar ist und auf der Tragwelle (3) ein erstes Nockensegment (7) mit einer ersten Ausnehmung (9) zur Aufnahme der Tragwelle (3) angeordnet ist, das bezüglich der Tragwelle (3) drehbar ist und mit Hilfe eines Verbindungsmittels (17) drehfest und axial fest mit der Innenwelle (5) verbunden ist,
wobei
auf der Tragwelle (3) ein zweites Nockensegment (25) mit einer zweiten Ausnehmung (27) zur Aufnahme der Tragwelle (3) angeordnet ist, wobei das zweite Nockensegment (25) mindestens zwei Nockenkonturen (29, 31) aufweist und wobei das zweite Nockensegment (25) derart auf der Tragwelle (3) befestigt ist, dass das zweite Nockensegment (25) drehfest mit der Tragwelle (3) verbunden ist und das zweite Nockensegment (25) axial verschiebbar auf der Tragwelle (3) angeordnet ist, **dadurch gekennzeichnet, dass**
die Nockenwelle (1) ein Rastmittel (35) umfasst, um das zweite Nockensegment (25) an einer Mehrzahl von Axialpositionen zu verrasten, wobei das Rastmittel (35) zumindest teilweise innerhalb der Innenwelle (5) angeordnet ist.

2. Nockenwelle (1) nach Anspruch 1,
**dadurch gekennzeichnet, dass**
das Rastmittel (35) das zweite Nockensegment (25) gegenüber der Innerwelle (5) verrastet.

3. Nockenwelle (1) nach einem der Ansprüche 1-2,
**dadurch gekennzeichnet, dass**
das Rastmittel (35) zur Verrastung des zweiten Nockensegmentes (25) eine Bohrung (36) in der Innenwelle (5) mit einem federbelastetem und in radialer Richtung beweglich gelagertem Rastkörper (37) umfasst, wobei der Rastkörper (37) durch eine Rastöffnung (41) in der Tragwelle (3) reicht und in eine Rastnut (45, 46) in der Innenseite der zweiten Ausnehmung (27) des zweiten Nockensegmentes (25) eingreift.

4. Nockenwelle (1) nach Anspruch 3,
**dadurch gekennzeichnet, dass**
die Rastöffnung (41) in der Tragwelle (3) und die Rastnut (45, 46) jeweils eine Ausdehnung in Umfangsrichtung aufweisen, die größer ist als die Ausdehnung des Rastkörpers (37) in Umfangsrichtung, so dass der Rastkörper (37) eine Verdrehung der Innenwelle (5) relativ zur Tragwelle (3) nicht behindert.

5. Nockenwelle (1) nach Anspruch 4,
**dadurch gekennzeichnet, dass**
die Rastnut (45, 46) umlaufend ist.

6. Nockenwelle (1) nach einem der Ansprüche 1-5,
**dadurch gekennzeichnet, dass**
die Innenseite der zweiten Ausnehmung (27) des zweiten Nockensegmentes (25) und die Außenseite der Tragwelle (3) sich gegenüberliegenden Einbuchtungen (47, 49) aufweisen, so dass sich Hohlräume ergeben, in denen Lagerkörper (51) angeordnet sind.

7. Nockenwelle (1) nach Anspruch 6,
**dadurch gekennzeichnet, dass**
die Einbuchtungen (47) auf der Innenseite der zweiten Ausnehmung (27) oder die Einbuchtungen (49) auf der Außenseite der Tragwelle (3) in axialer Richtung eine größere Ausdehnung aufweisen als die Lagerkörper (51), um eine axiale Verschiebung des zweiten Nockensegmentes (25) auf der Tragwelle (3) zu ermöglichen.

8. Nockenwelle (1) nach einem der Ansprüche 6-7,
**dadurch gekennzeichnet, dass**
die Einbuchtungen (47) auf der Innenseite der zweiten Ausnehmung und die Einbuchtungen (49) auf der Außenseite der Tragwelle (3) in Umfangsrichtung eine Ausdehnung aufweisen, die im Wesentlichen der Ausdehnung der Lagerkörper (51) in diese Richtung entspricht, um eine Verdrehung des zweiten Nockensegmentes (25) relativ zur Tragwelle (3) zu verhindern.

9. Nockenwelle (1) nach einem der Ansprüche 1-5,
**dadurch gekennzeichnet, dass**
auf der Innenseite der zweiten Ausnehmung (27) und auf der Außenseite der Tragwelle (3) ineinandergreifende Verzahnungen (63, 69) angeordnet sind, deren Zahnrillen sich in axialer Richtung erstrecken, so dass eine axiale Verschiebung des zweiten Nockensegmentes (25) auf der Tragwelle (3) ermöglicht wird und eine Verdrehung des zweiten Nockenelementes relativ zur Tragwelle (3) verhindert wird.

10. Nockenwelle (1) nach Anspruch 9,
**dadurch gekennzeichnet, dass**
die Verzahnung (69) auf der Außenseite der Tragwelle (3) in Form eines aufgepressten Zahnringes (67) ausgeführt ist.

11. Nockenwelle (1) nach einem der Ansprüche 1-10,
**dadurch gekennzeichnet, dass**
das zweite Nockensegment (25) mindestens eine erste Kulissenbahn (53) zum Bewegen des zweiten Nockensegmentes (25) in eine erste axiale Richtung (57) und eine zweite Kulissenbahn (55) zum Bewegen des zweiten Nockensegmentes (25) in eine zweite axiale Richtung (59) aufweisen, wobei die zweite axiale Richtung (59) zur ersten axialen Richtung (57) entgegengesetzt ist.

12. Nockenwelle (1) nach Anspruch 11,
**dadurch gekennzeichnet, dass**
die erste Kulissenbahn (53) und/oder die zweite Kulissenbahn (55) nutförmig ausgebildet sind.

13. Nockenwelle (1) nach Anspruch 12
**dadurch gekennzeichnet, dass**
die erste Kulissenbahn (53) in Form einer zumindest bereichsweise schräg verlaufenden, dem ersten Nockensegment (25) abgewandten, Stirnseite des zweiten Nockensegmentes (7) ausgebildet ist.

14. Nockenwelle (1) nach einem der Ansprüche 12-13,
**dadurch gekennzeichnet, dass**
die zweite Kulissenbahn (55) in Form einer zumindest bereichsweise schräg verlaufenden, dem ersten Nockensegment (7) zugewandten, Stirnseite des zweiten Nockensegmentes (25) ausgebildet ist.

15. Nockenwelle (1) nach einem der Ansprüche 1-14,
**dadurch gekennzeichnet, dass**
das erste Nockensegment (7) oder das zweite Nockensegment (25) einen Bereich umfasst, der als Lagerstelle zur Lagerung der Nockenwelle (1) in einer Lageraufnahme eines Verbrennungsmotors ausgebildet ist.

## Claims

1. Camshaft (1) comprising a supporting shaft which is designed as a hollow shaft and in the interior of which an inner shaft (5) is arranged concentrically with respect to the supporting shaft (3), wherein the inner shaft (5) is rotatable relative to the supporting shaft (3) and, on the supporting shaft (3), there is arranged a first cam segment (7) with a first recess (9) for receiving the supporting shaft (3), which first cam segment is rotatable relative to the supporting shaft (3) and is connected rotationally conjointly and axially fixedly to the inner shaft (5) with the aid of a connecting means (17),
wherein,
on the supporting shaft (3), there is arranged a second cam segment (25) with a second recess (27) for receiving the supporting shaft (3), wherein the second cam segment (25) comprises at least two cam contours (29, 31), and wherein the second cam segment (25) is fastened to the supporting shaft (3) such that the second cam segment (25) is connected rotationally conjointly to the supporting shaft (3) and the second cam segment (25) is arranged axially displaceably on the supporting shaft (3),
**characterized in that**
the camshaft (1) comprises a detent means (35) for arresting the second cam segment (25) at a multiplicity of axial positions, wherein the detent means (35) is arranged at least partially within the inner shaft (5).

2. Camshaft (1) according to Claim 1,
**characterized in that**
the detent means (35) arrests the second cam segment (25) relative to the inner shaft (3).

3. Camshaft (1) according to either of Claims 1 and 2,
**characterized in that**
the detent means (35) comprises, for the arresting of the second cam segment (25), a bore (36) in the inner shaft (5) with a spring-loaded detent body (37) which is mounted so as to be movable in a radial direction, wherein the detent body (37) extends through a detent opening (41) in the supporting shaft (3) and engages into a detent groove (45, 46) in the inner side of the second recess (27) of the second cam segment (25).

4. Camshaft (1) according to Claim 3,
**characterized in that**
the detent opening (41) in the supporting shaft (3) and the detent groove (45, 46) each comprise an extent in a circumferential direction which is greater than the extent of the detent body (37) in the circumferential direction, such that the detent body (37) does not impede a rotation of the inner shaft (5) relative to the supporting shaft (5).

5. Camshaft (1) according to Claim 4,
**characterized in that**
the detent groove (45, 46) is of encircling form.

6. Camshaft (1) according to any of Claims 1-5,
**characterized in that**
the inner side of the second recess (27) of the second cam segment (25) and the outer side of the supporting shaft (3) comprise mutually oppositely situated indentations (47, 49), such that cavities are formed, in which bearing bodies (51) are arranged.

7. Camshaft (1) according to Claim 6,
**characterized in that**
the indentations (47) on the inner side of the second recess (27) or the indentations (49) on the outer side of the supporting shaft (3) comprise a greater extent in an axial direction than the bearing bodies (51), in order to permit an axial displacement of the second cam segment (25) on the supporting shaft (3).

8. Camshaft (1) according to either of Claims 6 and 7,
**characterized in that**
the indentations (47) on the inner side of the second recess and the indentations (49) on the outer side of the supporting shaft (3) comprise, in the circumferential direction, an extent which substantially corresponds to the extent of the bearing bodies (51) in said direction, in order to prevent a rotation of the second cam segment (25) relative to the supporting shaft (3).

9. Camshaft (1) according to any of Claims 1-5,
**characterized in that**
toothings (63, 69) are arranged on the inner side of the second recess (27) and on the outer side of the supporting shaft (3), which toothings engage into one another and the tooth channels of which toothings extend in the axial direction, such that an axial displacement of the second cam segment (25) on the supporting shaft (3) is permitted and a rotation of the second cam element relative to the supporting shaft (3) is prevented.

10. Camshaft (1) according to Claim 9,
**characterized in that**
the toothing (69) on the outer side of the supporting shaft (3) is designed in the form of a pressed-on toothed ring (67).

11. Camshaft (1) according to any of Claims 1-10,
**characterized in that**
the second cam segment (25) comprises at least one first slotted-guide track (53) for the movement of the second cam segment (25) in a first axial direction (57) and a second slotted-guide track (55) for the movement of the second cam segment (25) in a second axial direction (59), wherein the second axial direction (59) is opposite to the first axial direction (57).

12. Camshaft (1) according to Claim 11,
**characterized in that**
the first slotted-guide track (53) and/or the second slotted-guide track (55) are/is of groove-like form.

13. Camshaft (1) according to Claim 12,
**characterized in that**
the first slotted-guide track (53) is designed in the form of a face side of the second cam segment (7), which runs obliquely at least in certain regions and which is averted from the first cam segment (25).

14. Camshaft (1) according to either of Claims 12 and 13,
**characterized in that**
the second slotted-guide track (55) is designed in the form of a face side, which runs obliquely at least in certain regions and which faces towards the first cam segment (7), of the second cam segment (25) .

15. Camshaft (1) according to any of Claims 1-14,
**characterized in that**
the first cam segment (7) or the second cam segment (25) comprises a region which is designed as a bearing point for the mounting of the camshaft (1) in a bearing receptacle of an internal combustion engine.

## Revendications

1. Arbre à cames (1), comprenant un arbre porteur réalisé sous forme d'arbre creux, à l'intérieur duquel est disposé, concentriquement à l'arbre porteur (3), un arbre interne (5), l'arbre interne (5) pouvant tourner par rapport à l'arbre porteur (3) et un premier segment de came (7) avec un premier évidement (9) pour recevoir l'arbre porteur (3) étant disposé sur l'arbre porteur (3), lequel peut tourner par rapport à l'arbre porteur (3) et est connecté à l'aide d'un moyen de connexion (17) de manière solidaire en rotation et fixée axialement à l'arbre interne (5),
un deuxième segment de came (25) avec un deuxième évidement (27) pour recevoir l'arbre porteur (3) étant disposé sur l'arbre porteur (3), le deuxième segment de came (25) présentant au moins deux contours de came (29, 31) et le deuxième segment de came (25) étant fixé sur l'arbre porteur (3) de telle sorte que le deuxième segment de came (25) soit connecté de manière solidaire en rotation à l'arbre porteur (3) et que le deuxième segment de came (25) soit disposé de manière déplaçable axialement sur l'arbre porteur (3),
**caractérisé en ce que**
l'arbre à cames (1) comprend un moyen d'encliquetage (35) afin d'encliqueter le deuxième segment de came (25) sur une pluralité de positions axiales, le moyen d'encliquetage (35) étant disposé au moins en partie à l'intérieur de l'arbre interne (5).

2. Arbre à cames (1) selon la revendication 1,
**caractérisé en ce que**
le moyen d'encliquetage (35) encliquète le deuxième segment de came (25) par rapport à l'arbre interne (5).

3. Arbre à cames (1) selon l'une quelconque des revendications 1 et 2,
**caractérisé en ce que**
le moyen d'encliquetage (35) pour l'encliquetage du deuxième segment de came (25) comprend un alésage (36) dans l'arbre interne (5) avec un corps d'encliquetage (37) sollicité par ressort et supporté de manière déplaçable dans la direction radiale, le corps d'encliquetage (37) s'étendant à travers une ouverture d'encliquetage (41) dans l'arbre porteur (3) et s'engageant dans une rainure d'encliquetage (45, 46) dans le côté intérieur du deuxième évidement (27) du deuxième segment de came (25).

4. Arbre à cames (1) selon la revendication 3,
**caractérisé en ce que**
l'ouverture d'encliquetage (41) dans l'arbre porteur (3) et la rainure d'encliquetage (45, 46) présentent chacune un étendue dans la direction périphérique qui est supérieure à l'étendue du corps d'encliquetage (37) dans la direction périphérique, de telle sorte que le corps d'encliquetage (37) n'empêche pas une rotation de l'arbre interne (5) par rapport à l'arbre porteur (3) .

5. Arbre à cames (1) selon la revendication 4,
**caractérisé en ce que**
la rainure d'encliquetage (45, 46) est périphérique.

6. Arbre à cames (1) selon l'une quelconque des revendications 1 à 5,
**caractérisé en ce que**
le côté intérieur du deuxième évidement (27) du deuxième segment de came (25) et le côté extérieur de l'arbre porteur (3) présentent des renfoncements opposés (47, 49) de telle sorte qu'il en résulte des cavités dans lesquelles sont disposés des corps de palier (51).

7. Arbre à cames (1) selon la revendication 6,
**caractérisé en ce que**
les renfoncements (47) sur le côté intérieur du deuxième évidement (27) ou les renfoncements (49) sur le côté extérieur de l'arbre porteur (3) présentent dans la direction axiale une plus grande étendue que les corps de palier (51) afin de permettre un déplacement axial du deuxième segment de came (25) sur l'arbre porteur (3).

8. Arbre à cames (1) selon l'une quelconque des revendications 6 et 7,
**caractérisé en ce que**
les renfoncements (47) sur le côté intérieur du deuxième évidement et les renfoncements (49) sur le côté extérieur de l'arbre porteur (3) présentent dans la direction périphérique une étendue qui correspond essentiellement à l'étendue des corps de palier (51) dans cette direction, afin d'empêcher une rotation du deuxième segment de came (25) par rapport à l'arbre porteur (3).

9. Arbre à cames (1) selon l'une quelconque des revendications 1 à 5,
**caractérisé en ce que**
des dentures (63, 69) s'engageant les unes dans les autres sont disposées sur le côté intérieur du deuxième évidement (27) et sur le côté extérieur de l'arbre porteur (3), leurs entailles de dents s'étendant dans la direction axiale de telle sorte qu'un déplacement axial du deuxième segment de came (25) sur l'arbre porteur (3) soit possible et qu'une rotation du deuxième segment de came par rapport à l'arbre porteur (3) soit empêchée.

10. Arbre à cames (1) selon la revendication 9,
**caractérisé en ce que**
la denture (69) sur le côté extérieur de l'arbre porteur (3) est réalisée sous la forme d'une bague dentée (67) appliquée par pressage.

11. Arbre à cames (1) selon l'une quelconque des revendications 1 à 10,
**caractérisé en ce que**
le deuxième segment de came (25) présente au moins une première piste de coulissement (53) pour le déplacement du deuxième segment de came (25) dans une première direction axiale (57) et une deuxième piste de coulissement (55) pour le déplacement du deuxième segment de came (25) dans une deuxième direction axiale (59), la deuxième direction axiale (59) étant opposée à la première direction axiale (57).

12. Arbre à cames (1) selon la revendication 11,
**caractérisé en ce que**
la première piste de coulissement (53) et/ou la deuxième piste de coulissement (55) sont réalisées en forme de rainure.

13. Arbre à cames (1) selon la revendication 12,
**caractérisé en ce que**
la première piste de coulissement (53) est réalisée sous la forme d'un côté frontal du deuxième segment de came (7) s'étendant au moins en partie obliquement, opposé au premier segment de came (25).

14. Arbre à cames (1) selon l'une quelconque des revendications 12 et 13,
**caractérisé en ce que**
la deuxième piste de coulissement (55) est réalisée sous la forme d'un côté frontal du deuxième segment de came (25) s'étendant au moins en partie obliquement, tourné vers le premier segment de came (7).

15. Arbre à cames (1) selon l'une quelconque des revendications 1 à 14,
**caractérisé en ce que**
le premier segment de came (7) ou le deuxième segment de came (25) comprend une région qui est réalisée sous forme de point de palier pour le support sur palier de l'arbre à cames (1) dans un logement de palier d'un moteur à combustion interne.
